# EUROPEAN PATENT SPECIFICATION

(11) **EP 2 147 876 B1**
(45) Date of publication and mention of the grant of the patent: **18.09.2013**
(21) Application number: 09165392.3
(22) Date of filing: 14.07.2009
(51) Int. Cl.: B65G 21/20

(54) **Guiding element and method of producing a guiding element**
Führungselement und Verfahren zur Herstellung eines Führungselements
Élément de guidage et procédé de production d'un élément de guidage

(30) Priority: 25.07.2008 NL 1035756
(43) Date of publication of application: 27.01.2010
(73) Proprietor: Kors Capital Management B.V., 7201 DJ Zutphen (NL)
(72) Inventor: Kors, Michaël Harry, 7201 DJ, Zutphen (NL); Nijhof, Lucas, 7241 VN, Lochem (NL)
(74) Representative: de Lange, Hendrik Cornelis

(56) References cited:
- WO-A-02/16197
- DE-B- 1 235 802
- DE-B- 1 244 652
- DE-U1- 29 610 201
- FR-A- 2 284 538
- GB-A- 1 495 983
- US-A- 3 193 077
- US-A1- 2005 067 252

## Description

The invention relates to a guiding element for guiding elongated upright products, such as bottles, which guiding element comprises at least a lower guide edge and an upper guide edge extending parallel thereto, which upper and lower guide edges are connected by means of a web.

Such guiding elements are, for example, used in filling lines for bottles. Via such guides, the bottles are guided to a washing station, then to a filling machine, and subsequently to a sealing machine, where the bottle is capped, and finally to a labelling machine for affixing a label to the bottle. Especially in the case of breakable bottles, such as bottles made of glass or a ceramic material, it is important that the guides be configured so that the bottles cannot break. In particular in the case of production lines in which the bottles are transported along the guides at a high speed it is important that the guides do not have much effect on the bottles but on the other hand ensure that the bottles follow the correct path.

Thus it is usual in this field of the art to use guiding elements whose guide edges are provided with a plastic material. The use of plastic material is a further development of the previously used metal guide edges. At the time, a metal guide sufficed for guiding the bottles. As the speed of the bottles in the guides increased, however, the metal guides caused too much damage to the bottles, in some cases even leading to breakage. For that reason it was decided to replace parts of the metal guides by parts made of plastic material, which have a better coefficient of friction and cause less damage to the bottles.

With the prior art guides, a plastic lower plate and a plastic upper plate are used, which each form a guide edge, which two plastic plates are connected by means of a metal, preferably stainless steel, web plate. Said connecting of the plate takes place by means of bolts.

This construction has the drawback that, in the very first place, assembly is labour-intensive, and furthermore that guiding elements thus configured are not easy to clean, making it difficult to meet the standards of hygiene. In particular in the transition areas between the plastic plates and the metal web plate there is a risk of bacteria remaining on the contact surfaces. In addition to that, the bolts and the openings needed for said bolts form cavities, where bacteria or cleaning agents may remain, which is undesirable, in particular in the case of production lines for consumer goods.

In the art, numerous guiding elements have been proposed: A first guiding element is shown in the German patent DE 1235802 which describes a guiding rail comprising attachment bolts according to the preamble of claim 1. The guiding element is produced by profiling a sheet like metal in a certain profile. This disclosure does not disclose making a guiding element by providing a solid block of material and removing material there from. Further examples from the state of the art are the German patent DE 1244652, the German utility model DE 29610201, the French patent application FR 2284538, the English patent GB 1495983, the United States patent application US 2005/0067252, the International patent application 02/16197 and the United States patent US 3,193,077 all are less relevant.

It is an object of the invention to provide a guiding element which obviates the above drawbacks. This objective is accomplished with a guiding element according to claim 1. Since the guiding element is monolithic, i.e. formed in one piece, there are no contact surfaces or cavities where bacteria or cleaning agents can remain. As a result, such a guiding element is easier to clean and it will be easier to meet the standards of hygiene.

In one embodiment of the guiding element according to the invention, the upper guide edge is an edge of an upper flat plate. The lower guide edge may be the edge of a lower flat plate in that case. Such an embodiment has the advantage that the guiding elements can be easily placed on upper parts of the production line. The use of flat plates in production has an additional advantage if a monolithic guiding element is used in that at least one of the surfaces of the flat plate may be an outer surface of the starting material.

In another embodiment of the guiding element according to the invention, the web is plate-shaped. The configuration of such an embodiment is designed to conform to that of the guiding elements known from the prior art as much as possible. The upper and lower flat plate may extend substantially parallel to each other in that case, with the plate-shaped web extending between the two flat plates, substantially perpendicularly thereto.

In a preferred embodiment of the guiding element according to the invention, the web is corrugated in shape, seen in longitudinal direction. By designing the web to have a corrugated shape, additional strength is imparted to the web, so that the guiding element, and in particular the upper and lower guide edges, will be capable of absorbing a larger force whilst relatively less material is required. This has the advantage that the weight of the guiding element is reduced.

In the guiding element according to the invention is preferably made of plastic material. In addition to that, one or more intermediate guide edges may be provided between the upper and the lower guide edge, extending parallel thereto.

The invention further comprises a method of producing a guiding element according to claim 9 of the invention, which method comprises the steps of;
- providing a solid block of material;
- removing parts from said solid block so as to form a guiding element.

Said removing of parts from the solid block preferably takes place by machining operations. Think in this connection of drilling and milling.

Since guiding elements are usually made to size for a specific production line, such guiding elements cannot be produced in large numbers. It is advantageous, therefore, to provide a solid block of material and remove parts therefrom, for example by means of machining operations. This is an advantageous method in particular if the material is a plastic material. In most cases it is not advantageous to use an injection moulding method for such production lines, in view of the numbers involved. This is caused on the one hand by the fact that the numbers are low and on the other hand by the fact that the dimensions of a guiding element are large, so that the required moulds are correspondingly costly.

Finally, the invention comprises a device for guiding elongated, upright products, such as bottles, which device comprises at least two guiding elements according to the invention, which two guiding elements are arranged in spaced parallel relationship, the spacing between the two guiding elements being substantially the same as the thickness of the upright products according to claim11.

In a preferred embodiment of the device according to the invention, one of the guiding elements is a drivable wheel, whilst the guide edges of the guiding elements are provided with recesses for receiving the products.

The above and further aspects of the invention will now be explained in more detail with reference to the appended drawings.
Figure 1 is a perspective view of a device according to the invention, which comprises guiding elements according to the invention.
Figure 2 shows the parts of the device of figure 1 in exploded view.
Figure 3A shows a second embodiment of a guiding element according to the invention.
Figure 3B shows a third embodiment of a guiding element according to the invention.

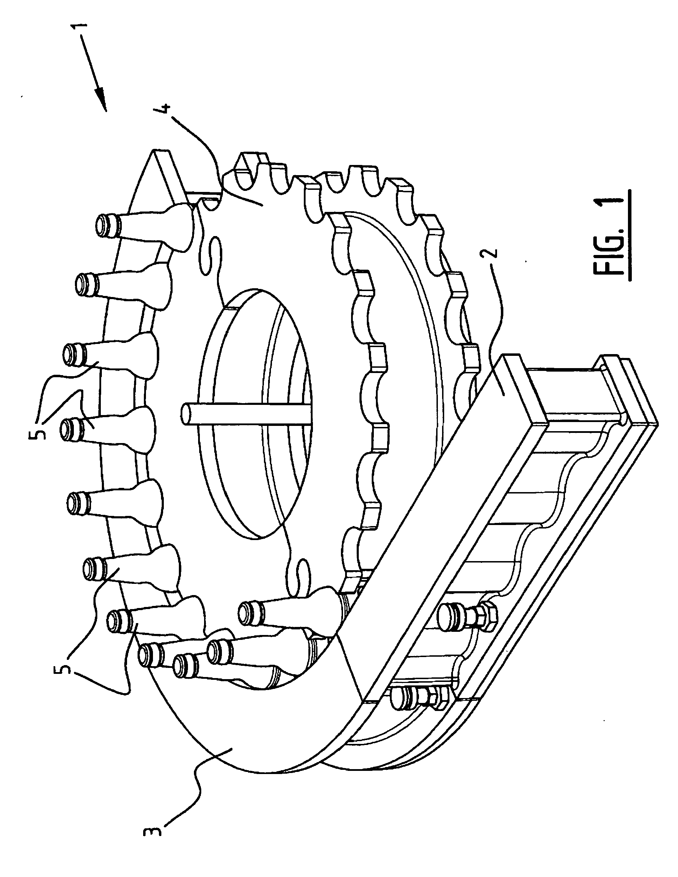

In figure 1 a device 1 according to the invention is shown. Said device 1 consists of an elongated guiding element 2, an arcuate guiding element 3 and a wheel-shaped guiding element 4. In the illustrated device 1, the rectilinear guiding portion and the arcuate guiding portion 6 form an outer guide, whilst the guide wheel 4 forms the inner guide. Bottles 5 are transported between said outer guide 2, 3 and said inner guide 4.

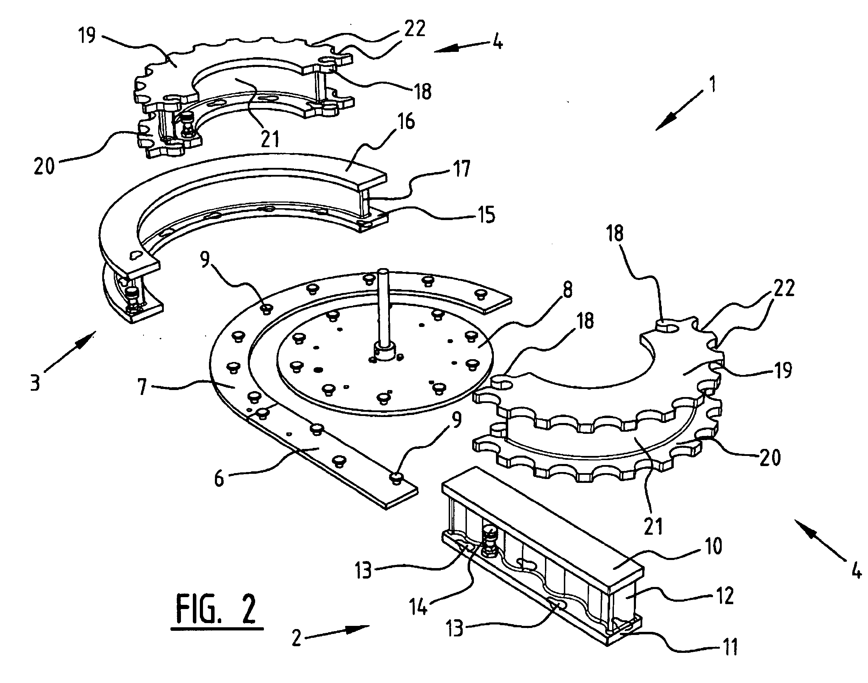

In figure 2 the parts of the device 1 of figure 1 are shown in exploded view. The guiding elements 2, 3, 4 are mounted to baseplates 6, 7, 8 by means of a quick-connection system. Each of said baseplates is provided with projections 9.

The rectilinear guiding element 2 comprises an upper flat plate 10, a lower flat plate 11 extending parallel thereto and a corrugated web plate 12. The lower flat plate 11 is provided with slotted holes 13, into which the projections 9 extend. Furthermore, a locking element 14 is provided, which prevents the guiding elements 2 from being displaced over the baseplates.

The arcuate guiding element 3 is likewise provided with a lower flat plate 15 and a flat plate 16 arranged parallel thereto, with a curved, straight web plate 17 provided therebetween.

The wheel-shaped guiding element 4 consists of two parts, which are connected by means of hooks 18 in the form of jigsaw pieces. Said wheel-shaped guiding elements, too, comprise an upper flat plate 19, a lower flat plate 20 and a web plate 21 provided therebetween.

The upper and lower flat plates 20, 19 are each provided with recesses 22, in which the bottles 5 are received. Thus it becomes possible to drive the bottles 5 and, in addition, arrange them a correct pitch distance apart, so that the bottles can be easily supplied to a machine, for example for washing, filling or sealing the bottles.

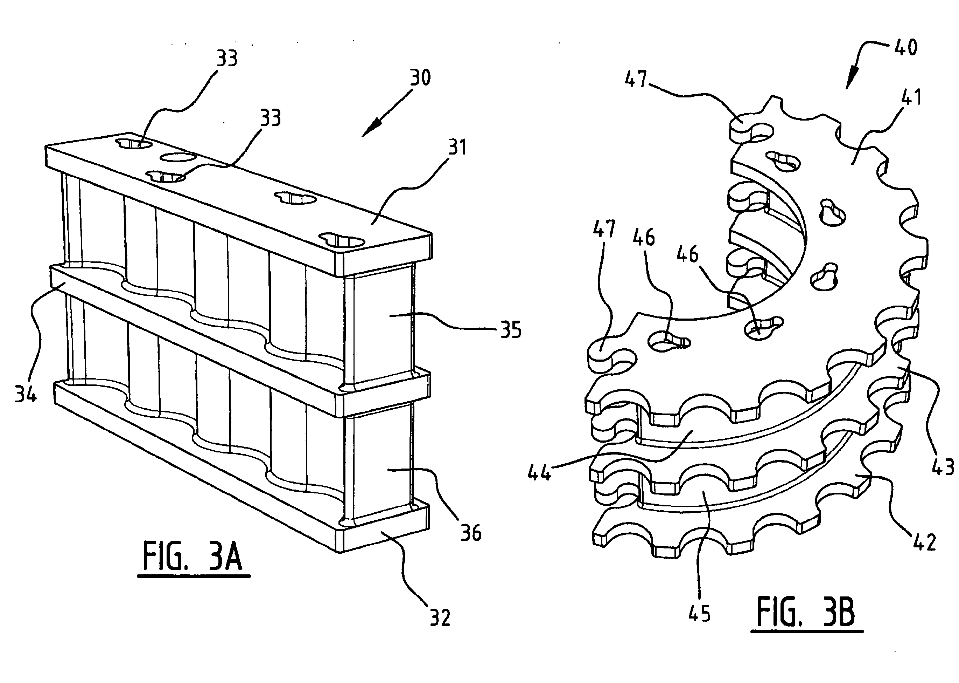

In figure 3A a second embodiment 30 of a guiding element according to the invention is shown. Said guiding element 30 has a lower flat plate 31 and an upper flat plate 32 arranged parallel thereto. Slotted holes 33 are formed in the lower flat plate 31, so that the guiding elements 30 can be quickly and efficiently mounted in a production line.

Disposed between the lower flat plate 31 and the upper flat plate 32 is a flat intermediate plate 34, which is connected to the lower plate 31 and the upper plate by means of corrugated web plates 35 and 36, respectively.

Figure 3B shows a third embodiment 40 of a guiding element according to the invention. In this case the guiding element 40 makes up half of a wheel-shaped guiding element. The guiding element 40 comprises a semi-circular lower plate 41 and a semi-circular upper plate 42. Disposed between said plates is a semi-circular intermediate plate 43, which is connected to the upper and lower plate 42, 41 by means of web plates 44 and 45, respectively.

Slotted holes 46 are formed in the lower plate to enable a quick mounting of the guiding element. Furthermore, the semi-circular plates 41, 42, 43 are each provided with connecting elements 47 in the form of jigsaw pieces. By means of said connecting elements, the guiding element 40 can be connected to a correspondingly shaped guiding element so as to form a wheel-shaped guiding element. This is advantageous, in particular with a view to realising a quick assembly to and disassembly from a production line, because the guiding elements are easy to handle in this way.

## Claims

1. A guiding element (2,3) configured for guiding elongated upright products, such as bottles (6), which guiding element comprises at least a lower edge and an upper edge extending parallel thereto, which upper and lower guide edge are connected by means of a web (12) and whereby the guiding element is monolithic, **characterised in that** the guiding element further comprises a lower plate (11,31,41) with slotted holes (13,33,46).

2. The guiding element according to claim 1, wherein the upper guide edge is an edge of an upper flat plate.

3. The guiding element according to claim 1 or 2, wherein the lower guide edge is an edge of a lower flat plate.

4. The guiding element according to claims 1, 2 or 3, wherein said web is plate-shaped.

5. A guiding element according to either one of claims 3 or 4, wherein the upper and lower flat plate extend substantially parallel to each other, with the plate-shaped web extending between the two flat plates, substantially perpendicularly thereto.

6. The guiding element according to any one of the preceding claims, wherein the web is corrugated in shape, seen in longitudinal direction.

7. The guiding element according to any one of the preceding claims, wherein the guiding element is made of plastic material.

8. The guiding element according to any one of the preceding claims, wherein one or more intermediate guide edges are provided between the upper and the lower guide edge, extending parallel thereto.

9. A method of producing a guiding element (2, 3) for guiding elongated upright products, such as bottles (5), which guiding element comprises at least a lower guide edge and an upper guide edge extending parallel thereto, which upper and lower guide edges are connected by means of a web (12), wherein said guiding element is monolithic, which method comprises the steps of:
- providing a solid block of material;
- removing parts from said solid block so as to form a guiding element.

10. The method according to claim 9, wherein said removing of parts from the solid block takes place by machining operations.

11. A device for guiding elongated upright products, such as bottles, which device comprises at least two guiding element according to any one of the preceding claims 1 - 8, wherein the two guiding elements are arranged in spaced parallel relationship, the spacing between the two guiding elements being substantially the same as the thickness of the upright products.

12. The device according to claim 11, wherein one of the guiding elements is a drivable wheel, whilst the guide edges of the guiding elements are provided with recesses for receiving the products.

## Patentansprüche

1. Führungselement (2, 3), das zum Führen langer aufrechter Produkte, wie Flaschen (5), konfiguriert ist, wobei das Führungselement mindestens eine untere Kante und eine obere Kante, die sich parallel zueinander erstrecken, aufweist, wobei die untere und die obere Führungskante mittels einer Bahn (12) verbunden sind und wobei das Führungselement monolithisch ist, **dadurch gekennzeichnet, dass** das Führungselement weiterhin eine untere Platte (11, 31, 41) mit geschlitzten Öffnungen (13, 33, 46) aufweist.

2. Führungselement nach Anspruch 1, wobei die obere Führungskante eine Kante einer oberen flachen Platte ist.

3. Führungselement nach Anspruch 1 oder 2, wobei die untere Führungskante eine Kante einer unteren flachen Platte ist.

4. Führungselement nach Anspruch 1 oder 2, wobei die Bahn plattenförmig ist.

5. Führungselement nach einem der Ansprüche 3 oder 4, wobei die obere und die untere flache Platte sich im Wesentlichen parallel zueinander erstrecken, mit der plattenförmigen Bahn, die sich zwischen den beiden Platten im Wesentlichen senkrecht dazu erstreckt.

6. Führungselement nach einem der vorhergehenden Ansprüche, wobei die Bahn in Längsrichtung betrachtet von gewellter Form ist.

7. Führungselement nach einem der vorhergehenden Ansprüche, wobei das Führungselement aus Kunststoffmaterial hergestellt ist.

8. Führungselement nach einem der vorhergehenden Ansprüche, wobei eine oder mehrere Zwischenführungskanten zwischen der oberen und der unteren Führungskante vorgesehen sind, die sich parallel dazu erstrecken.

9. Verfahren zum Herstellen eines Führungselements (2, 3) zum Führen langer aufrechter Produkte, wie Flaschen (5), wobei das Führungselement mindestens eine untere Führungskante und eine obere Führungskante, die sich parallel zueinander erstrecken, aufweist, wobei die untere und die obere Führungskante mittels einer Bahn (12) verbunden sind, wobei das Führungselement monolithisch ist, wobei das Verfahren die Schritte aufweist:
- Bereitstellen eines festen Materialblockes;
- Entfernen von Teilen des festen Blockes, um ein Führungselement zu bilden.

10. Verfahren nach Anspruch 9, wobei das Entfernen der Teile von dem festen Block durch spanabhebende Bearbeitungen durchgeführt wird.

11. Vorrichtung zum Führen langer aufrechter Produkte, wie Flaschen, wobei die Vorrichtung mindestens zwei Führungselemente gemäß einem der vorhergehenden Ansprüche 1-8 umfasst, wobei die zwei Führungselemente voneinander beabstandet und parallel zueinander angeordnet sind, und wobei der Abstand zwischen den zwei Führungselementen im Wesentlichen der gleiche ist wie die Größe der aufrechten Produkte.

12. Vorrichtung nach Anspruch 11, wobei eines der Führungselemente ein antreibbares Rad ist, während die Führungskanten der Führungselemente mit Aussparungen zur Ausnahme der Produkte vorgesehen sind.

## Revendications

1. Elément de guidage (2, 3) configuré pour guider des produits droits allongés, tels que des bouteilles (6), lequel élément de guidage comprend au moins un bord inférieur et un bord supérieur s'étendant parallèlement à ce dernier, lesquels bords de guidage supérieur et inférieur sont raccordés au moyen d'une bande (12), et moyennant quoi l'élément de guidage est monolithique, **caractérisé en ce que** l'élément de guidage comprend en outre une plaque inférieure (11, 31, 41) avec des trous fendus (13, 33, 46).

2. Elément de guidage selon la revendication 1, dans lequel le bord de guidage supérieur est un bord d'une plaque plate supérieure.

3. Elément de guidage selon la revendication 1 ou 2, dans lequel le bord de guidage inférieur est un bord d'une plaque plate inférieure.

4. Elément de guidage selon les revendications 1, 2 ou 3, dans lequel ladite bande est en forme de plaque.

5. Elément de guidage selon l'une des revendications 3 ou 4, dans lequel les plaques plates supérieure et inférieure s'étendent de manière sensiblement parallèle entre elles, avec la bande en forme de plaque qui s'étend entre les deux plaques plates, sensiblement perpendiculairement à ces dernières.

6. Elément de guidage selon l'une quelconque des revendications précédentes, dans lequel la bande a une forme ondulée, observé dans la direction longitudinale.

7. Elément de guidage selon l'une quelconque des revendications précédentes, dans lequel l'élément de guidage est réalisé à partir d'une matière plastique.

8. Elément de guidage selon l'une quelconque des revendications précédentes, dans lequel un ou plusieurs bords de guidage intermédiaires sont prévus entre les bords de guidage supérieur et inférieur s'étendant parallèlement à ces derniers.

9. Procédé pour produire un élément de guidage (2, 3) pour guider des produits droits allongés, tels que des bouteilles (5), lequel élément de guidage comprend au moins un bord de guidage inférieur et un bord de guidage supérieur s'étendant parallèlement à ce dernier, lesquels bords de guidage supérieur et inférieur sont raccordés au moyen d'une bande (12), dans lequel ledit élément de guidage est monolithique, lequel procédé comprend les étapes consistant à :
- prévoir un bloc de matériau plein ;
- retirer des parties dudit bloc plein afin de former un élément de guidage.

10. Procédé selon la revendication 9, dans lequel ledit retrait de parties du bloc plein à lieu grâce à des opérations d'usinage.

11. Dispositif pour guider des produits droits allongés, tels que des bouteilles, lequel dispositif comprend au moins deux éléments de guidage selon l'une quelconque des revendications 1 à 8, dans lequel les deux éléments de guidage sont agencés en relation parallèle espacée, l'espacement entre les deux éléments de guidage étant sensiblement le même que l'épaisseur des produits droits.

12. Dispositif selon la revendication 11, dans lequel l'un des éléments de guidage est une roue pouvant être entraînée, alors que les bords de guidage des éléments de guidage sont prévus avec des évidements pour recevoir les produits.
